(19) **Europäisches Patentamt / European Patent Office / Office européen des brevets**

(11) **EP 4 518 468 B1**

(12) **EUROPEAN PATENT SPECIFICATION**

<table>
<tr><td>(45) Date of publication and mention<br>of the grant of the patent:<br><b>01.07.2026 Bulletin 2026/27</b></td><td>(51) International Patent Classification (IPC):<br><i>G01S 5/02</i> <sup>(2010.01)</sup>   <i>H04W 4/02</i> <sup>(2018.01)</sup><br><i>H04W 64/00</i> <sup>(2009.01)</sup>   <i>H04W 24/10</i> <sup>(2009.01)</sup><br><i>G06F 18/211</i> <sup>(2023.01)</sup>   <i>G06F 18/22</i> <sup>(2023.01)</sup><br><i>H04W 16/28</i> <sup>(2009.01)</sup></td></tr>
</table>

(21) Application number: **23845019.1**

(22) Date of filing: **23.05.2023**

(52) Cooperative Patent Classification (CPC):
**G01S 5/02; G06F 18/211; G06F 18/22; H04W 4/02; H04W 24/10; H04W 64/00;** H04W 16/28

(86) International application number:
**PCT/CN2023/095691**

(87) International publication number:
**WO 2024/021805 (01.02.2024 Gazette 2024/05)**

(54) **VERTICAL POSITIONING METHOD AND SERVER**

VERFAHREN UND SERVER ZUR VERTIKALEN POSITIONIERUNG

PROCÉDÉ ET SERVEUR DE POSITIONNEMENT VERTICAL

<table>
<tr><td>(84) Designated Contracting States:<br><b>AL AT BE BG CH CY CZ DE DK EE ES FI FR GB<br>GR HR HU IE IS IT LI LT LU LV MC ME MK MT NL<br>NO PL PT RO RS SE SI SK SM TR</b></td><td>(56) References cited:<br>EP-A1- 3 817 467    WO-A1-2020/024156<br>WO-A1-2020/207096    CN-A- 103 546 963<br>CN-A- 104 270 813    CN-A- 106 341 882<br>CN-A- 107 431 894    CN-A- 110 095 792<br>CN-A- 111 818 634    US-B1- 8 165 599</td></tr>
<tr><td>(30) Priority: <b>26.07.2022 CN 202210885300</b></td><td></td></tr>
<tr><td>(43) Date of publication of application:<br><b>05.03.2025 Bulletin 2025/10</b></td><td>• <b>VIVO: "Other aspects on AI/ML for positioning<br>accuracy enhancement", vol. RAN WG1, no. e-<br>Meeting; 20220509 - 20220520, 29 April 2022<br>(2022-04-29), XP052153030, Retrieved from the<br>Internet <URL:https://ftp.3gpp.org/tsg_ran/<br>WG1_RL1/TSGR1_109-e/Docs/R1-2203555.zip<br>R1-2203555 Other aspects on AIML for<br>positioning accuracy enhancement.docx><br>[retrieved on 20220429]</b></td></tr>
<tr><td>(73) Proprietor: <b>Huawei Technologies Co., Ltd.<br>Shenzhen, Guangdong 518129 (CN)</b></td><td></td></tr>
<tr><td>(72) Inventors:<br>• <b>GAO, Wenqiang<br>Shenzhen, Guangdong 518129 (CN)</b><br>• <b>LIU, Qinxin<br>Shenzhen, Guangdong 518129 (CN)</b><br>• <b>CHEN, Jiehua<br>Shenzhen, Guangdong 518129 (CN)</b></td><td>• <b>"Master's Thesis", 23 May 2021, SOUTHEAST<br>UNIVERSITY, CN, article WANG YIRONG:<br>"Research on Base Station Location and<br>Coverage Prediction Algorithm Based on MDT",<br>pages: 1 - 95, XP009552349, DOI: 10.27014/<br>d.cnki.gdnau.2021.001893</b></td></tr>
<tr><td>(74) Representative: <b>Grünecker Patent- und<br>Rechtsanwälte<br>PartG mbB<br>Leopoldstraße 4<br>80802 München (DE)</b></td><td></td></tr>
</table>

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This application claims priority to Chinese Patent Application No. 202210885300.7, filed with the China National Intellectual Property Administration on July 26, 2022 and entitled "VERTICAL POSITIONING METHOD AND SERVER".

**TECHNICAL FIELD**

This application relates to the field of communication technologies, and in particular, to a vertical positioning method, a communication apparatus for use in a server and a chip system for a server.

**BACKGROUND**

With rapid development of mobile internet and wide popularization of intelligent terminals, a telecommunication mobile operator obtains location information of a mobile terminal user, through a radio communication network or an external positioning, and then provides a valueadded service of a corresponding service for the user based on the location information of the mobile terminal. Therefore, a location based service (location based service, LBS) has attracted great attention, and a key to implementing the LBS is a positioning technology.

Currently, for vertical positioning on a mobile terminal, a vertical positioning model may be constructed based on an MRCALL signature feature of the mobile terminal (the MRCALL signature feature refers to a proportion of presence of a cell during call of the mobile terminal), a building drive test signature feature (the drive test signature feature refers to a proportion of a cell for a building, and location information of the building corresponds to current location information of the mobile terminal), and height information of the building, and vertical information of a target mobile terminal is measured by using the vertical positioning model.

In the foregoing solution, drive test information of the building (the drive test information includes the proportion of the cell in the building) needs to be constructed based on minimization of drive test (minimization of drive test, MDT) information, and then global positioning system (global positioning system, GPS) information reported by the mobile terminal is obtained by using an MDT protocol, to obtain bottom information of the building or top information of the building, that is, obtain the MDT information. However, user privacy of the terminal device may be disclosed based on the GPS information. Therefore, the foregoing solution is slowly promoted in terms of an NR standard, and cannot be widely applied at an initial stage and a middle stage of NR network construction.

The document VIVO: "Other aspects on AI/ML for positioning accuracy enhancement", 3GPP DRAFT; R1-2203555, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e¬Meeting; 20220509 - 20220520 29 April 2022 (2022-04-29), XP052153030 relates to possible use cases for AI/ML based positioning accuracy enhancement.

**SUMMARY**

Embodiments of this application provide a vertical positioning method and a server for vertical positioning on a terminal device in a building.

The invention is defined by the independent claims and further embodiments are set out in the dependent claims.

A first aspect of this application provides a vertical positioning method. In this application, the server receives measurement report MR information sent by a base station, where the MR information is reported by the terminal device to the base station, and obtains engineering parameters of the base station based on the MR information, where the engineering parameters include a cell site height, a base station downtilt, and an antenna azimuth of the base station. Then, the server extracts feature information of the terminal device from the MR information, and inputs the feature information of the terminal device and the engineering parameters of the base station into a preset artificial intelligence AI model, to predict a first height of the terminal device. The AI model is obtained through training by using engineering parameters of a plurality of base stations and feature information of a plurality of terminal devices as input samples and using a preset height as a label. Therefore, a vertical height of the terminal device is predicted without using the MDT information.

In some feasible implementations, the MR information includes sounding reference signal SRS beam information, the feature information includes an SRS beam feature extracted from the SRS beam information, the SRS beam feature includes an SRS beam energy feature, and the SRS beam energy feature is obtained by performing dimensionality reduction on the SRS beam information; and/or the MR information includes synchronization signal block SSB beam information, the feature information includes an SSB beam feature extracted from the SSB beam information, the SSB beam feature includes an SSB beam energy feature, and the SSB beam energy feature is obtained by the terminal device by performing dimensionality reduction on a vector including a plurality of detected RSRPs of each serving cell. In this way, the SRS beam energy feature and the SSB beam energy feature that are used for training the AI model are obtained.

In some feasible implementations, the SRS beam feature further includes at least one of vertical dimension feature information and a total SRS beam energy feature, the vertical dimension feature information is a percentage, in the SRS beam information, of a sum of energy that is of each row of an antenna panel of the base station and that is detected by the terminal device in total energy in the SRS beam information, and the total SRS beam energy feature is a sum of a preset quantity of highest energy values in the SRS beam information; and the SSB beam feature further includes an SSB beam sweeping feature and an SSB beam strongest level, the SSB beam sweeping feature is a quantity of SSBs that are sent by each serving cell and that are obtained by the terminal device through sweeping, and the SSB beam strongest level is at least one of strongest levels of SSBs that are sent by a primary serving cell and that are obtained by the terminal device through sweeping. In this way, another SRS beam feature and another SSB beam feature that are used for training the AI model are obtained.

In some feasible implementations, the feature information of the terminal device further includes a vertical angle of arrival vAOA between the terminal device and the base station, and the method further includes: The server determines a main lobe vertical azimuth $\theta_{beam\_v}^T$ of the terminal device based on the SRS beam information and the antenna azimuth; the server normalizes reference signal received powers RSRPs or energy values corresponding to the RSRPs in all directions in the SRS beam information, to obtain $\underline{P}_{BeamPwr}$; and the server calculates $\theta_{beam\_v}^T \times P_{BeamPwr}$, to obtain the vAOA.

In some feasible implementations, the server determines M pieces of SSB beam information corresponding to the vAOA, where M is a positive integer; the server determines N pieces of SSB beam information of strongest SSB beam signals in the M pieces of SSB beam information, where N is a positive integer less than M; the server calculates an average value of the N pieces of SSB beam information as a reference vector; the server calculates a similarity between the SSB beam information and the reference vector; and the server corrects the vAOA of the terminal device if the similarity is less than a preset value.

For example, that the server corrects the vAOA of the terminal device includes: The server subtracts a preset angle from the vAOA, to obtain a new vAOA of the terminal device.

In some feasible implementations, the feature information of the terminal device further includes a distance from the terminal device to the base station, and the method further includes: The server obtains first location information of the base station; the server obtains second location information of a building in which the terminal device is located; and the server estimates the distance from the terminal device to the base station based on the first location information and the second location information.

In some feasible implementations, the feature information of the terminal device further includes a distance from the terminal device to the base station, and the method further includes: The server obtains, from the MR information, delay information from the terminal device to the base station; and the server estimates the distance from the terminal device to the base station based on the delay information.

In some feasible implementations, the server obtains a height of an anchor terminal device; the server obtains SSB beam information and/or SRS beam information of the anchor terminal device; the server determines a first similarity between the SSB beam information of the terminal device and the SSB beam information of the anchor terminal device; and/or the server determines a second similarity between the SRS beam information of the terminal device and the SRS beam information of the anchor terminal device; the server estimates a second height of the terminal device based on the first similarity and/or the second similarity; and the server estimates a height of the terminal device based on the first height and the second height. In this way, accuracy of estimating the height of the terminal device is improved.

According to a second aspect, this application provides a server. The server device is configured to perform the method according to any implementation of the first aspect.

According to a third aspect, this application provides a computer-readable storage medium. The computer-readable storage medium stores instructions. When the instructions are run on a computer, the computer is enabled to perform the method according to any one of the first aspect, the second aspect, or the third aspect.

According to a fourth aspect, this application provides a computer program product. The computer program product includes computer-executable instructions. The computer-executable instructions are stored in a computer-readable storage medium. At least one processor of a device may read the computer-executable instructions from the computer-readable storage medium. When the at least one processor executes the computer-executable instructions, the device is enabled to implement the method according to any one of the first aspect or the possible implementations of the first aspect.

According to a fifth aspect, this application provides a communication apparatus. The communication apparatus may include at least one processor, a memory, and a communication interface. The at least one processor is coupled to the memory and the communication interface. The memory is configured to store instructions, the at least one processor is configured to execute the instructions, and the communication interface is configured to communicate with another communication apparatus under control of the at least one processor. When the instructions are executed by the at least one processor, the at least one processor is enabled to perform the method according to any one of the first aspect or the possible implementations of the first aspect.

According to a sixth aspect, an embodiment of this application provides a chip system, where the chip system includes a processor, configured to support implementing a function in the first aspect or any one of the possible implementations of the first aspect.

In a possible design, the chip system may further include a memory. The memory is configured to store necessary program instructions and data. The chip system may include a chip, or may include a chip and another discrete component.

For technical effects brought by any one of the second aspect to the sixth aspect or the possible implementations of the second aspect to the sixth aspect, refer to technical effects brought by the first aspect or the different possible implementations of the first aspect. Details are not described herein again.

## BRIEF DESCRIPTION OF DRAWINGS

FIG. 1 is a diagram of a composition structure of a communication system according to an embodiment of this application;

FIG. 2-1 is a schematic flowchart of a vertical positioning method according to an embodiment of this application;

FIG. 2-2 is a diagram of an embodiment in which a terminal device feeds back MR information to a base station according to an embodiment of this application;

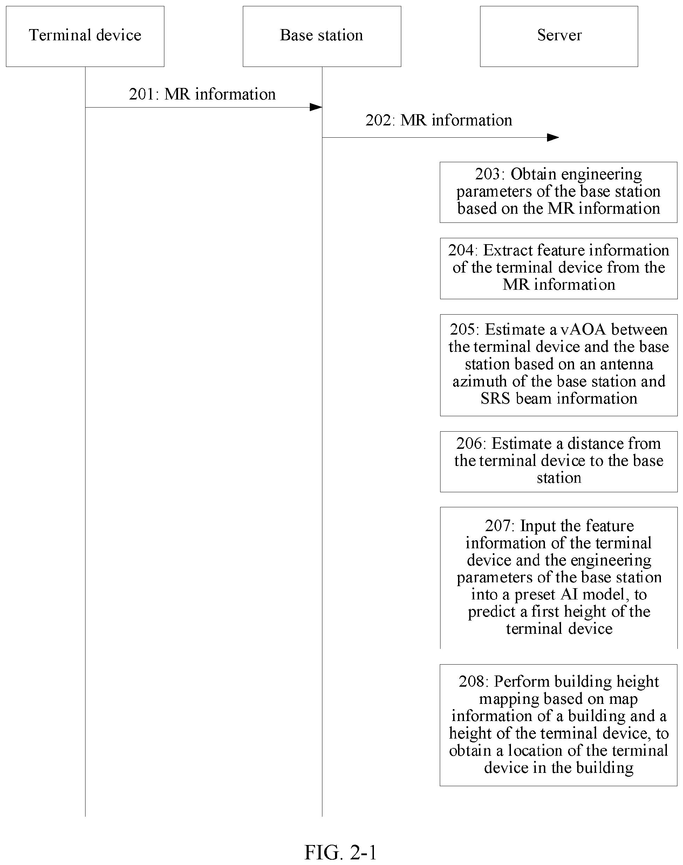

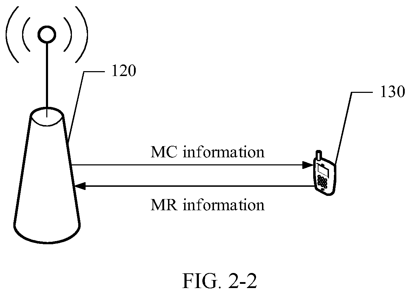

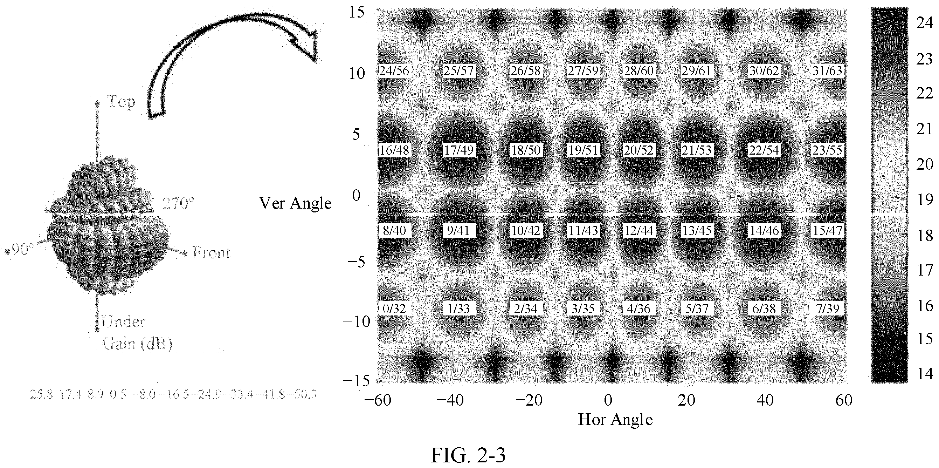

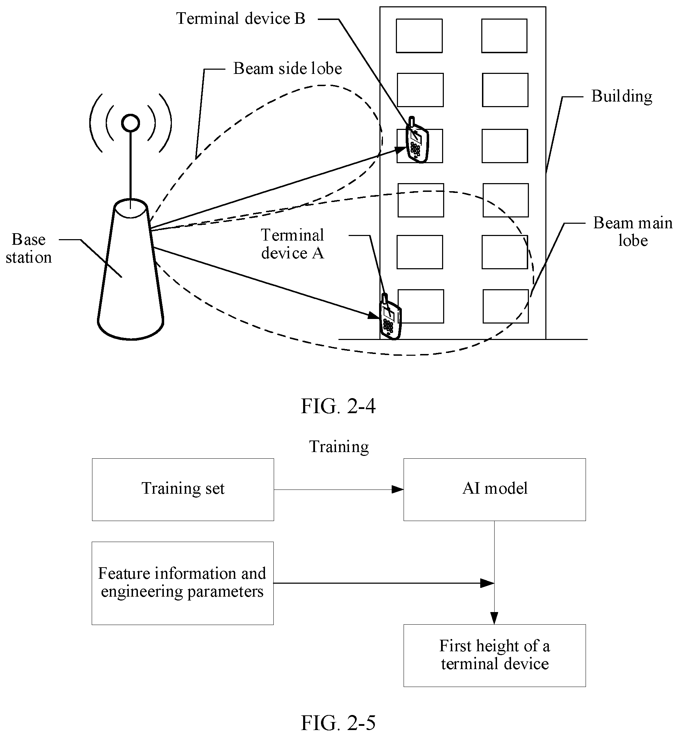

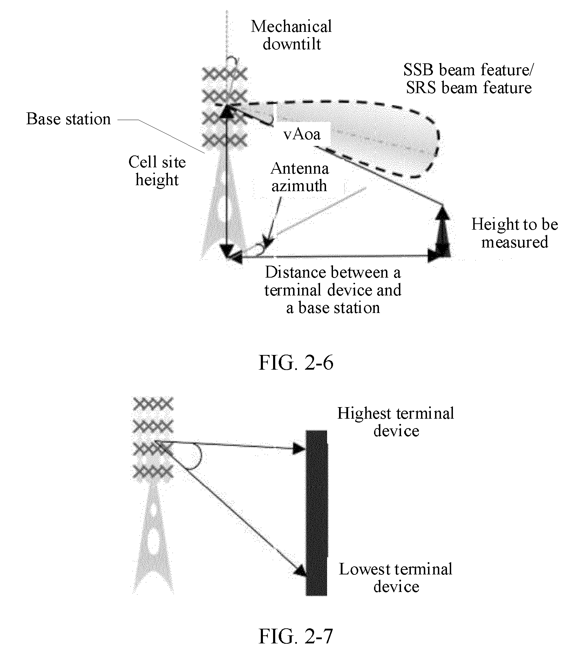

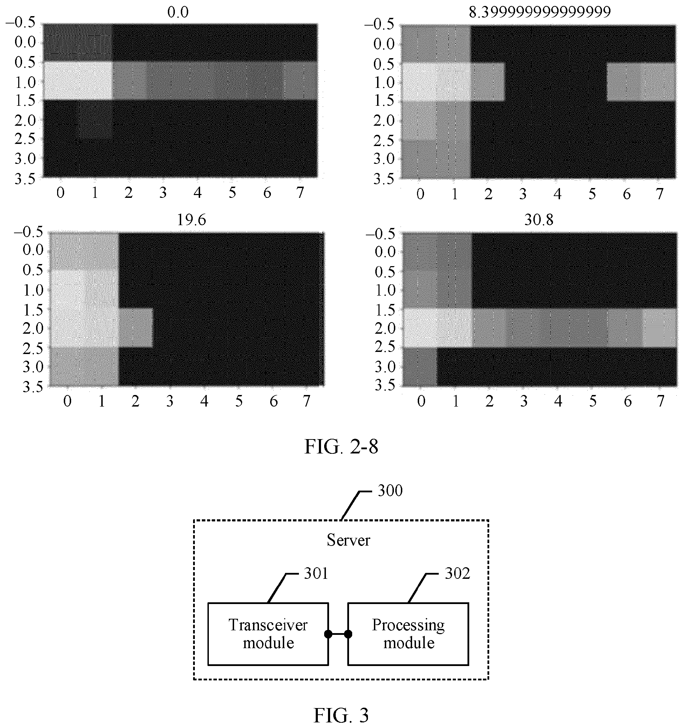

FIG. 2-3 is a diagram of an embodiment in which a terminal device detects SRS beam information according to an embodiment of this application;

FIG. 2-4 is a diagram of an embodiment in which a vAOA of a terminal device is flipped according to an embodiment of this application;

FIG. 2-5 is a diagram of an embodiment of training an AI model according to an embodiment of this application;

FIG. 2-6 is a diagram of an embodiment of estimating a height of a terminal device according to an embodiment of this application;

FIG. 2-7 is a diagram of an embodiment in which a height of a terminal device is positioned twice according to an embodiment of this application;

FIG. 2-8 is an energy diagram obtained by detecting a beam of a base station by a terminal device according to an embodiment of this application;

FIG. 3 is a diagram of a structure of a server according to an embodiment of this application; and

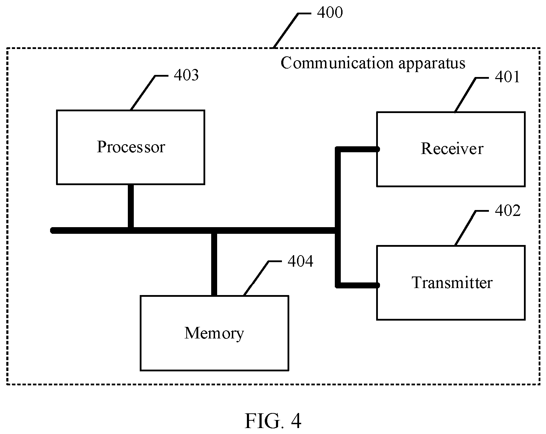

FIG. 4 is a diagram of a structure of a communication apparatus according to an embodiment of this application.

## DESCRIPTION OF EMBODIMENTS

Embodiments of this application provide a vertical positioning method and a related device for vertical positioning on a terminal device in a building.

The following describes embodiments of this application with reference to the accompanying drawings.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

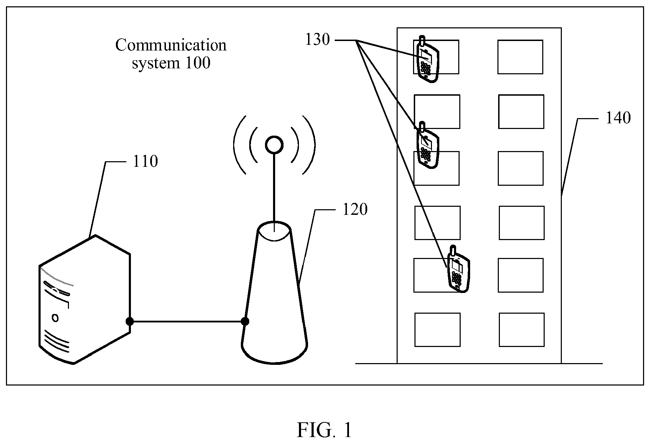

FIG. 1 is a diagram of a composition structure of a communication system according to an embodiment of this application. An embodiment of this application provides a communication system 100, including a server 110, a base station 120, a plurality of terminal devices 130, and a building 140.

In embodiments of this application, the server 110 may be an independent physical server, a server cluster or a distributed system including a plurality of physical servers, or a cloud server providing basic cloud computing services such as a cloud service, a cloud database, cloud computing, a cloud function, cloud storage, a network service, cloud communication, a middleware service, a domain name service, a security service, a CDN, big data, and an artificial intelligence platform. In some possible implementations, the server 110 is a network management center. This is not limited herein.

In embodiments of this application, the base station 120 is an access device through which the plurality of terminal devices 130 access the communication system 100 in a wireless manner, for example, a transmission reception point (transmission reception point, TRP), a next generation NodeB (next generation NodeB, gNB) in a 5G mobile communication system, or the like. The base station 120 and the server 110 may be directly or indirectly connected in a wired or wireless communication manner. This is not limited herein.

In embodiments of this application, the terminal device 130 may be referred to as user equipment (user equipment, UE), a mobile station (mobile station, MS), a mobile terminal (mobile terminal, MT), a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. A specific technology and a specific device form that are used by the terminal device are not limited in embodiments of this application.

In embodiments of this application, the building 140 may be any building of various heights, for example, a middle- and low-rise building below 50 meters or a high-rise building above 50 meters.

Currently, for vertical positioning on a mobile terminal, a vertical positioning model may be constructed based on an MRCALL signature feature of the mobile terminal (the MRCALL signature feature refers to a proportion of presence of a cell during call of the mobile terminal), a building drive test signature feature (the drive test signature feature refers to a proportion of a cell for a building, and location information of the building corresponds to current location information of the mobile terminal), and height information of the building, and vertical information of a target mobile terminal is measured by using the vertical positioning model.

In the foregoing solution, drive test information of the building (the drive test information includes the proportion of the cell for the building) needs to be constructed based on minimization of drive test (minimization of drive test, MDT) information, and then global positioning system (global positioning system, GPS) information reported by the mobile terminal is obtained by using an MDT protocol, to obtain bottom information of the building or top information of the building, which is regarded as obtaining the MDT information. However, the GPS information may disclose user privacy of the terminal device. Therefore, the foregoing solution is slowly promoted in an NR standard, and cannot be applied in a large scale at an initial stage and a middle stage of NR network construction.

In this application, the server receives measurement report MR information sent by a base station, where the MR information is reported by the terminal device to the base station, and obtains engineering parameters of the base station based on the MR information, where the engineering parameters include a cell site height, a base station downtilt, and an antenna azimuth of the base station. Then, the server extracts feature information of the terminal device from the MR information, and inputs the feature information of the terminal device and the engineering parameters of the base station into a preset artificial intelligence AI model, to predict a first height of the terminal device. The AI model is obtained through training by using engineering parameters of a plurality of base stations and feature information of a plurality of terminal devices as input samples and using a preset height as a label. Therefore, a vertical height of the terminal device is predicted without using the MDT information.

The communication system provided in this application is described in the foregoing embodiment. The following describes a terminal positioning method performed based on the communication system. Refer to FIG. 2-1. The terminal positioning method provided in an embodiment of this application mainly includes the following steps.

201: The terminal device sends measurement report (measurement report, MR) information to the base station.

It should be noted that the MR information is data sent by the terminal device to the base station every fixed duration (for example, 480 milliseconds or 470 milliseconds) on a service channel between the terminal device and the base station, and the MR information may be used to evaluate and optimize quality of communication between the terminal device and the base station.

In some feasible implementations, as shown in FIG. 2-2, the base station may first send measurement configuration (measurement configuration, MC) information to the terminal device, and then the terminal device performs MR measurement based on the MC information, to obtain the MR information. The MR information includes a sounding reference signal (sounding reference signal, SRS) and synchronization signal block (synchronization signal block, SSB) beam information. Then, the terminal device reports the MR information to the base station.

It should be noted that, after receiving the MC information, the terminal device sweeps intra-frequency information periodically broadcast by the base station, and records a reference signal received power (reference signal received power, RSRP) in each direction as signal strength. For example, as shown in FIG. 2-3, signal strength, namely, a reference signal received power (reference signal received power, RSRP), of an antenna panel of a base station detected by the terminal device is used as SRS beam information, and is carried in the MR information to be sent to the base station.

202: The base station sends the MR information to the server.

In an embodiment of this application, after receiving MR information reported by a terminal device, the base station may forward the MR information to the server.

203: The server obtains the engineering parameters of the base station based on the MR information.

It should be noted that the engineering parameters of the base station include a cell site height (that is, a height of an antenna enclosure mounted in the base station) and a mechanical downtilt and an antenna azimuth of the base station.

It should be noted that a data packet that carries the MR information and that is sent by the base station to the server includes cell information of the base station, and the server may query the engineering parameters of the base station based on the cell information of the base station. In some feasible implementations, the cell information of the base station is a cell global identifier (cell global identifier, CGI).

204: The server extracts the feature information of the terminal device from the MR information.

In some feasible implementations, the feature information of the terminal device includes an SRS beam feature extracted from the SRS beam information, the SRS beam feature includes an SRS beam energy feature, and the SRS beam energy feature is obtained by performing dimensionality reduction on the SRS beam information; and/or the feature information of the terminal device includes an SSB beam feature extracted from the SSB beam information, the SSB beam feature includes an SSB beam energy feature, and the SSB beam energy feature is obtained by the terminal device by performing dimensionality reduction on a vector including a plurality of detected RSRPs of each serving cell.

It should be noted that, after receiving the MR information, the server may obtain the SRS beam information through resolving. For example, the SRS beam information is a 64-dimensional vector, and each element in the vector is an RSRP value. Then, the server may extract feature information in the SRS beam information by using a dimension reduction algorithm (for example, principal component analysis (principal component analysis, PCA)), to obtain the SRS beam energy feature.

It should be noted that, after receiving the MR information, the server may obtain the SSB beam information through resolving. For example, the SSB beam information is a plurality of SSBs obtained through sweeping in one primary serving cell and 0 to 8 neighboring cells (a total of nine cells). For example, eight SSBs may be obtained through sweeping in each cell. In this case, the SSB beam information may be 9*8=72 SSBs, that is, a 72-dimensional vector, and each element in the vector is an RSRP value. Then, the server may extract feature information in the SSB beam information by using a dimension reduction algorithm (for example, PCA), to obtain the SSB beam energy feature.

In some feasible implementations, the SRS beam feature further includes at least one of vertical dimension feature information and a total SRS beam energy feature, the vertical dimension feature information is a percentage, in the SRS beam information, of a sum of energy that is of each row of an antenna panel of the base station and that is detected by the terminal device in total energy in the SRS beam information, and the total SRS beam energy feature is a sum of a preset quantity of highest energy values in the SRS beam information.

For example, the terminal device detects that there are four rows and 16 columns of antenna panels of the base station, and the server accumulates RSRP values of each row based on the SRS beam information to obtain four sums of energy (four rows), and then accumulates the four sums of energy to obtain the total energy of the SRS beam information. A four-dimensional vector is obtained by using a ratio of four sums of energy to the total energy of the SRS beam information, and the vector is the vertical dimension feature information.

For example, the total SRS beam energy feature is a sum of 16 highest energy values (that is, highest RSRP values) in the SRS beam information.

In some feasible implementations, the SSB beam feature further includes an SSB beam sweeping feature and an SSB beam strongest level, the SSB beam sweeping feature is a quantity of SSBs that are sent by each serving cell and that are obtained by the terminal device through sweeping, and the SSB beam strongest level is at least one of strongest levels of SSBs that are sent by a primary serving cell and that are obtained by the terminal device through sweeping.

For example, the terminal device obtains three SSBs through sweeping in the primary serving cell, obtains five SSBs through sweeping in one neighboring cell, and obtains no SSBs through sweeping in all other neighboring cells. In this case, an obtained SSB sweeping feature is (3,5,0,0,0,0,0,0,0).

For example, as shown in Table 1, a feature is extracted from the SRS beam information and/or the SSB beam information, to obtain the SRS beam feature and/or the SSB beam feature.

**Table 1**

| Feature information | Include | Feature source |
|---|---|---|
| SRS beam feature | 1. SRS beam energy feature<br>2. Vertical dimension feature information<br>3. Total SRS beam energy feature | SRS beam information |
| SSB beam feature | 1. SSB beam energy feature<br>2. SSB beam sweeping feature<br>3. SSB beam strongest level | SSB beam information |

205: The server estimates a vAOA between the terminal device and the base station based on the antenna azimuth of the base station and the SRS beam information.

In some feasible implementations, the feature information of the terminal device further includes an AOA from the terminal device to the base station. In this case, the server may estimate the vAOA between the terminal device and the base station based on the antenna azimuth of the base station and the SRS beam information.

For example, the server determines a main lobe vertical azimuth $\theta_{beam\_v}T$ of the terminal device based on the SRS beam information and the antenna azimuth, then normalizes reference signal received powers RSRPs or energy values corresponding to the RSRPs in all directions in the SRS beam information, to obtain $\underline{P}_{BeamPwr}$, and finally calculates $\theta_{beam\_v}{}^T \times \underline{P}_{BeamPwr}$, to obtain the vAOA.

$\theta_{beam\_h}{}^T$ represents a horizontal azimuth of a beam main lobe detected by the terminal device, and a specific angle may be determined with reference to an antenna pattern of the base station and the SRS beam information. $\underline{P}_{BeamPwr}$ indicates that the RSRPs or the energy values BeamRsrp corresponding to the RSRPs in all the directions in the SRS beam information are normalized to obtain:

$$\underline{P}_{BeamPwr} = 10^{\wedge}(\text{BeamRsrp}/10)$$

It should be noted that, in a scenario in which the terminal device is located in a high-rise building, an error may occur in the vAOA of the terminal device. For example, as shown in FIG. 2-4, in a case of coverage of a same base station, because a building is close to the base station, a main lobe beam covers a lower part of the building, and a side lobe beam covers an upper part of the building. If terminal device A is covered by the main lobe beam, and terminal device B is covered by the side lobe beam, detected vAOA (a) of terminal device A under the coverage of the side lobe beam is the same as detected vAOA (b) of terminal device B under the coverage of the side lobe beam.

In this case, the server may determine M pieces of SSB beam information corresponding to the vAOA, where M is a positive integer, determine N pieces of SSB beam information of strongest SSB beam signals in the M pieces of SSB beam information, where N is a positive integer less than M, and calculate an average value of the N pieces of SSB beam information as a reference vector. Finally, the server calculates a similarity (for example, a cosine similarity) between the SSB beam information and the reference vector. If the similarity is less than a preset value, the vAOA of the terminal device is corrected. In some possible implementations, the server may subtract a preset angle (for example, 30°) from the vAOA to obtain a new vAOA of the terminal device.

For example, the server may adjust the vAOA of the terminal device by using the following formula:

$$f(vAoa, SSB\_Beam) = Vaoa\_adjust$$

*SSB_Beam* represents the SSB beam information, *Vaoa_adjust* represents a calibrated vAOA of the terminal device, and f() is used to calculate a function model of an adjustment result based on the vAOA of the terminal device and *SSB_Beam*. In some feasible implementations, f() may be used to calculate a cosine similarity between *SSB_Beam s* corresponding to the vAOA of the terminal device. If the cosine similarity is less than the preset value, the vAOA returned from f() to the terminal device is equal to the detected vAOA minus a preset degree, for example, 30°.

206: The server estimates a distance from the terminal device to the base station.

In some possible implementations, the server may obtain first location information of the base station, obtain second location information of a building in which the terminal device is located, and estimate the distance from the terminal device to the base station based on the first location information and the second location information. In some possible implementations, the server may obtain, from the MR information, delay information from the terminal device to the base station, and estimate the distance from the terminal device to the base station based on the delay information, for example, multiply a delay value in the delay information by 4.88 meters/millisecond.

207: The server inputs the feature information of the terminal device and the engineering parameters of the base station into a preset AI model, to predict the first height of the terminal device.

In an embodiment of this application, the AI model is obtained through training by using engineering parameters of a plurality of base stations and feature information of a plurality of terminal devices as input samples and using a preset height as a label.

For example, Table 2 shows information that the server needs to input into the AI model.

**Table 2**

| Feature information | Include | Feature source |
|---|---|---|
| SRS beam feature | 1. SRS beam energy feature (mandatory)<br>2. Vertical dimension feature information<br>3. Total SRS beam energy feature | SRS beam information |

(continued)

| Feature information | Include | Feature source |
|---|---|---|
| SSB beam feature | 1. SSB beam energy feature (mandatory)<br>2. SSB beam sweeping feature<br>3. SSB beam strongest level | SSB beam information |
| Engineering parameters | 1. Cell site height<br>2. Base station downtilt | Engineering parameters |
| (mandatory) | 3. Antenna azimuth | |
| Other feature information | 1. vAOA between the terminal device and the base station<br>2. Distance between the terminal device and the base station | SRS beam information and engineering parameters |

For example, as shown in FIG. 2-5, the server first uses the foregoing information (input sample) and a corresponding height (label) as a training set, and inputs an AI model with an initial parameter for training, to obtain the AI model.

Then, as shown in FIG. 2-6, the server performs vertical positioning on the terminal device based on the SSB beam feature and/or the SRS beam feature, the cell site height, the mechanical downtilt, and the antenna azimuth of the base station, and/or the vAOA between the terminal device and the base station, and the distance from the terminal device to the base station, to obtain the first height of the terminal device.

It should be noted that, as shown in FIG. 2-7, when different terminal devices are at different vertical locations in a building, SRS beam information or SSB beam information of the terminal devices is greatly different. For example, when terminal device A is in location A of a building, and terminal device B is in location B of the building, SRS beam information of terminal device A differs greatly from SRS beam information of terminal device B, and SSB beam information of terminal device A differs greatly from SSB beam information of terminal device B. Therefore, vertical positioning on the terminal device may be improved by using these differences.

For example, the server obtains a height of an anchor terminal device, and obtains SSB beam information and/or SRS beam information of the anchor terminal device, and then determines a first similarity between the SSB beam information of the terminal device and the SSB beam information of the anchor terminal device; and/or the server determines a second similarity between the SRS beam information of the terminal device and the SRS beam information of the anchor terminal device. Finally, the server estimates a second height of the terminal device based on the first similarity and/or the second similarity, and estimates a height of the terminal device based on the first height and the second height. In some feasible implementations, the server may calculate an average value of the first height and the second height, and use the average value as the height of the terminal device.

208: The server performs building height mapping based on map information of the building and the height of the terminal device, to obtain a location of the terminal device in the building.

It should be noted that the map information may be obtained by manually measuring the building on site and preset in the server, or may be obtained by a developer or a relevant department of the building, which is not limited herein.

For example, the server determines a height of each floor in the building based on the map information. For example, in a building, heights of floors 1, 4, 7, and 10 are 0 m, 8.4 m, 19.6 m, and 30.8 m, respectively. Then, the server maps the vertical location of the terminal device in the building to the map information, to obtain a floor corresponding to the terminal device in the building. For example, it is determined that the height of the terminal device is 19.6 meters, and the floor corresponding to the terminal device in the building is a third floor. In some feasible implementations, the location in the building may also be displayed as a location percentage of the building. For example, if a height of a building is 50 meters, and a height of a terminal device is 40 meters, a location of the building is 80%.

It should be noted that, after determining the height of the terminal device, the server may send height information of the terminal device to the terminal device, or send the height information of the terminal device to an authorized service provider. This is not limited herein.

For example, as shown in FIG. 2-8, the server may obtain, through detection, energy diagrams obtained by performing beam detection on the base station by the terminal device at 0 m, 8.4 m, 19.6 m, and 30.8 m, where a lighter-colored location indicates higher energy.

For example, according to multi-site data verification, in the technical solution of this application, an average error of height prediction results of the terminal device for buildings less than 100 meters is less than 6 meters@67%.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

To better implement the solutions of embodiments of this application, a related apparatus for implementing the solutions is further provided below.

Refer to FIG. 3. A server 300 provided in an embodiment of this application may include:

a transceiver module 301, configured to receive measurement report MR information sent by a base station, where the MR information is reported by a terminal device to the base station; and a processing module 302, configured to obtain engineering parameters of the base station based on the MR information, where the engineering parameters include a cell site height, a base station downtilt, and an antenna azimuth of the base station; the processing module 302 is further configured to extract feature information of the terminal device from the MR information; the processing module 302 is further configured to input the feature information of the terminal device and the engineering parameters of the base station into a preset artificial intelligence AI model, to predict a first height of the terminal device; and the AI model is obtained through training by using engineering parameters of a plurality of base stations and feature information of a plurality of terminal devices as input samples and using a preset height as a label.

In some feasible implementations, the MR information includes sounding reference signal SRS beam information, the feature information includes an SRS beam feature extracted from the SRS beam information, the SRS beam feature includes an SRS beam energy feature, and the SRS beam energy feature is obtained by performing dimensionality reduction on the SRS beam information; and/or the MR information includes synchronization signal block SSB beam information, the feature information includes an SSB beam feature extracted from the SSB beam information, the SSB beam feature includes an SSB beam energy feature, and the SSB beam energy feature is obtained by the terminal device by performing dimensionality reduction on a vector including a plurality of detected RSRPs of each serving cell.

In some feasible implementations, the SRS beam feature further includes at least one of vertical dimension feature information and a total SRS beam energy feature, the vertical dimension feature information is a percentage, in the SRS beam information, of a sum of energy that is of each row of an antenna panel of the base station and that is detected by the terminal device in total energy in the SRS beam information, and the total SRS beam energy feature is a sum of a preset quantity of highest energy values in the SRS beam information; and the SSB beam feature further includes an SSB beam sweeping feature and an SSB beam strongest level, the SSB beam sweeping feature is a quantity of SSBs that are sent by each serving cell and that are obtained by the terminal device through sweeping, and the SSB beam strongest level is at least one of strongest levels of SSBs that are sent by a primary serving cell and that are obtained by the terminal device through sweeping.

In some feasible implementations, the feature information of the terminal device further includes a vertical angle of arrival vAOA between the terminal device and the base station; and the processing module 302 is further configured to: determine a main lobe vertical azimuth $\underline{\theta}_{beam\_v}{}^T$ of the terminal device based on the SRS beam information and the antenna azimuth, normalize reference signal received powers RSRPs or energy values corresponding to the RSRPs in all directions in the SRS beam information, to obtain $\underline{P}_{BeamP}$, and calculate $\underline{\theta}_{beam\_v}{}^T \times \underline{P}_{BeamPwr}$, to obtain the vAOA.

In some feasible implementations, the processing module 302 is further configured to: determine M pieces of SSB beam information corresponding to the vAOA, where M is a positive integer; determine N pieces of SSB beam information of strongest SSB beam signals in the M pieces of SSB beam information, where N is a positive integer less than M; calculate an average value of the N pieces of SSB beam information as a reference vector; calculate a similarity between the SSB beam information and the reference vector; and correct the vAOA of the terminal device if the similarity is less than a preset value.

In some feasible implementations, the processing module 302 is specifically configured to subtract a preset angle from the vAOA, to obtain a new vAOA of the terminal device.

In some feasible implementations, the processing module 302 is further configured to: obtain first location information of the base station; obtain second location information of a building in which the terminal device is located; and estimate a distance from the terminal device to the base station based on the first location information and the second location information.

In some feasible implementations, the feature information of the terminal device further includes a distance from the terminal device to the base station, and the processing module 302 is specifically configured to: obtain, from the MR information, delay information from the terminal device to the base station; and estimate the distance from the terminal device to the base station based on the delay information.

In some feasible implementations, the processing module 302 is specifically configured to: obtain a height of an anchor terminal device; obtain SSB beam information and/or SRS beam information of the anchor terminal device; determine a first similarity between the SSB beam information of the terminal device and the SSB beam information of the anchor terminal device; and/or determine, by the server, a second similarity between the SRS beam information of the terminal device and the SRS beam information of the anchor terminal device; estimate a second height of the terminal device based on the first similarity and/or the second similarity; and estimate a height of the terminal device based on the first height and the second height.

It should be noted that, because content such as information exchange between the modules/units of the apparatus and the execution processes thereof is based on the same concept as method embodiments of this application, technical effects brought are the same as those of the method embodiments of this application. For specific content, refer to the descriptions in the foregoing method embodiments of this application. Details are not described herein again.

An embodiment of this application further provides a computer storage medium. The computer storage medium stores a program. The program is executed to perform some or all of the steps recorded in the method embodiments.

The following describes another communication apparatus according to an embodiment of this application. Refer to FIG. 4. A communication apparatus 400 includes:

a receiver 401, a transmitter 402, a processor 403, and a memory 404. In some embodiments of this application, the receiver 401, the transmitter 402, the processor 403, and the memory 404 may be connected through a bus or in another manner, and an example in which the bus is used for connection is described in FIG. 4.

The memory 404 may include a read-only memory and a random access memory, and provide instructions and data to the processor 403. A part of the memory 404 may further include a non-volatile random access memory (non-volatile random access memory, NVRAM). The memory 404 stores an operating system and an operation instruction, an executable module, or a data structure, or a subset thereof, or an extended set thereof. The operation instruction may include various operation instructions used to implement various operations. The operating system may include various system programs, to implement various basic services and process a hardwarebased task.

The processor 403 controls an operation of the communication apparatus 400, and the processor 403 may also be referred to as a central processing unit (central processing unit, CPU). In a specific application, components of the communication apparatus 400 are coupled together by using a bus system. In addition to a data bus, the bus system may include a power supply bus, a control bus, a status signal bus, and the like. However, for clear description, various types of buses in the figure are marked as the bus system.

The method described in embodiments of this application may be applied to the processor 403, or may be implemented by the processor 403. The processor 403 may be an integrated circuit chip and has a signal processing capability. In an implementation process, steps in the method may be implemented by using a hardware integrated logical circuit in the processor 403, or by using instructions in a form of software. The processor 403 may be a general-purpose processor, a digital signal processor (digital signal processor, DSP), an application-specific integrated circuit (applicationspecific integrated circuit, ASIC), a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 404, and the processor 403 reads information in the memory 404 and completes the steps of the foregoing methods in combination with hardware of the processor 403.

The receiver 401 may be configured to: receive input digit or character information, and generate a signal input related to a related setting and function control. The transmitter 402 may include a display device like a display. The transmitter 402 may be configured to output digit or character information through an external interface.

In embodiments of this application, the processor 403 is configured to perform the vertical positioning method performed by the server 300.

In another possible design, when the server 300 or the communication apparatus 400 is a chip, the server 300 or the communication apparatus 400 includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the terminal performs the wireless report information sending method according to any one of the possible implementations of the first aspect. Optionally, the storage unit is a storage unit in the chip, for example, a register or a buffer. Alternatively, the storage unit may be a storage unit in the terminal but outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits configured to control program execution of the methods.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions in the foregoing implementations, a person skilled in the art may clearly understand that this application may be implemented by using software in addition to necessary general-purpose hardware, or by using special-purpose hardware, including an application-specific integrated circuit, a dedicated CPU, a dedicated memory, a dedicated element or component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A vertical positioning method, comprising:

   receiving (201, 202), by a server (110), measurement report, MR, information from a terminal device (130) via a base station (120);
   obtaining (203), by the server, engineering parameters of the base station based on the MR information, wherein the engineering parameters comprise a cell site height, a base station downtilt, and an antenna azimuth of the base station;
   extracting (204), by the server, feature information of the terminal device from the MR information; and
   inputting (207), by the server, the feature information of the terminal device and the engineering parameters of the base station into a preset artificial intelligence, AI, model, to predict a first height of the terminal device, wherein the AI model is obtained through training by using engineering parameters of a plurality of base stations and feature information of a plurality of terminal devices as input samples and using a preset height as a label.

2. The method according to claim 1, wherein

   the MR information comprises sounding reference signal, SRS, beam information, the feature information comprises an SRS beam feature extracted from the SRS beam information, the SRS beam feature comprises an SRS beam energy feature, and the SRS beam energy feature is obtained by performing dimensionality reduction on the SRS beam information; and/or
   the MR information comprises synchronization signal block, SSB, beam information, the feature information comprises an SSB beam feature extracted from the SSB beam information, the SSB beam feature comprises an SSB beam energy feature, and the SSB beam energy feature is obtained by the terminal device by performing dimensionality reduction on a vector comprising a plurality of detected reference signal received powers, RSRPs, of each serving cell.

3. The method according to claim 2, wherein

the SRS beam feature further comprises at least one of vertical dimension feature information and a total SRS beam energy feature, the vertical dimension feature information is a percentage, in the SRS beam information, of a sum of energy that is of each row of an antenna panel of the base station and that is detected by the terminal device in total energy in the SRS beam information, and the total SRS beam energy feature is a sum of a preset quantity of highest energy values in the SRS beam information; and

the SSB beam feature further comprises an SSB beam sweeping feature and an SSB beam strongest level, the SSB beam sweeping feature is a quantity of SSBs that are sent by each serving cell and that are obtained by the terminal device through sweeping, and the SSB beam strongest level is at least one of strongest levels of SSBs that are sent by a primary serving cell and that are obtained by the terminal device through sweeping.

4. The method according to any one of claims 1 to 3, wherein the feature information of the terminal device further comprises a vertical angle of arrival vAOA between the terminal device and the base station, and the method further comprises:

determining, by the server, a main lobe vertical azimuth $\underline{\theta}_{beam\_v}{}^T$ of the terminal device based on the SRS beam information and the antenna azimuth;

normalizing, by the server, reference signal received powers RSRPs or energy values corresponding to the RSRPs in all directions in the SRS beam information, to obtain $\underline{P}_{BeamPwr}$; and

calculating, by the server, $\theta_{beam\_v}{}^T \times \underline{P}_{BeamPwr}$, to obtain (205) the vAOA.

5. The method according to claim 4, wherein the method further comprises:

determining, by the server, M pieces of SSB beam information corresponding to the vAOA, wherein M is a positive integer;

determining, by the server, N pieces of SSB beam information of strongest SSB beam signals in the M pieces of SSB beam information, wherein N is a positive integer less than M;

calculating, by the server, an average value of the N pieces of SSB beam information as a reference vector;

calculating, by the server, a similarity between the SSB beam information and the reference vector; and

correcting, by the server, the vAOA of the terminal device if the similarity is less than a preset value.

6. The method according to claim 5, wherein the correcting, by the server, the vAOA of the terminal device comprises: subtracting, by the server, a preset angle from the vAOA, to obtain a new vAOA of the terminal device.

7. The method according to any one of claims 1 to 6, wherein the feature information of the terminal device further comprises a distance from the terminal device to the base station, and the method further comprises:

obtaining, by the server, first location information of the base station;

obtaining, by the server, second location information of a building in which the terminal device is located; and

estimating (206), by the server, the distance from the terminal device to the base station based on the first location information and the second location information.

8. The method according to any one of claims 1 to 6, wherein the feature information of the terminal device further comprises a distance from the terminal device to the base station, and the method further comprises:

obtaining, by the server from the MR information, delay information from the terminal device to the base station; and

estimating (206), by the server, the distance from the terminal device to the base station based on the delay information.

9. The method according to any one of claims 1 to 8, wherein the method further comprises:

obtaining, by the server, a height of an anchor terminal device;

obtaining, by the server, SSB beam information and/or SRS beam information of the anchor terminal device;

determining, by the server, a first similarity between the SSB beam information of the terminal device and the SSB beam information of the anchor terminal device; and/or determining, by the server, a second similarity between the SRS beam information of the terminal device and the SRS beam information of the anchor terminal device; estimating, by the server, a second height of the terminal device based on the first similarity and/or the second similarity; and

estimating, by the server, a height of the terminal device based on the first height and the second height.

10. A computer-readable storage medium, wherein the computer-readable storage medium stores a program, and the program enables a computer device of a server to perform the method according to any one of claims 1 to 9.

11. A computer program product, wherein the computer program product comprises computer-executable instructions, the computer-executable instructions are stored in a computer-readable storage medium, at least one processor of a server reads the computer-executable instructions from the computer-readable storage medium, and the at least one processor performs the computer-executable instructions to enable the server to perform the method according to any one of claims 1 to 9.

12. A communication apparatus (400) for use in a server, wherein the communication apparatus comprises means for implementing the method according to any one of claims 1 to 9.

13. A chip system for a server, wherein the chip system comprises a processor (403) and a memory (404), the memory and the processor are interconnected through a line, the memory stores instructions, and the processor is configured to perform the method according to any one of claims 1 to 9.

**Patentansprüche**

1. Verfahren zur vertikalen Positionierung, umfassend:

   Empfangen (201, 202) von Messberichtsinformationen, MR-Informationen, durch einen Server (110) über eine Basisstation (120) aus einer Endgerätevorrichtung (130);
   Ermitteln (203) von technischen Parametern der Basisstation basierend auf den MR-Informationen durch den Server, wobei die technischen Parameter eine Höhe des Zellenstandorts, eine Abwärtsneigung der Basisstation und einen Antennenazimut der Basisstation umfassen;
   Extrahieren (204) von Merkmalsinformationen der Endgerätevorrichtung durch den Server aus den MR-Informationen; und
   Eingeben (207) der Merkmalsinformationen der Endgerätevorrichtung und der technischen Parameter der Basisstation durch den Server in ein voreingestelltes Modell der künstlichen Intelligenz, KI-Modell, um eine erste Höhe der Endgerätevorrichtung vorherzusagen, wobei das KI-Modell über Training unter Verwendung technischer Parameter einer Vielzahl von Basisstationen und Merkmalsinformationen einer Vielzahl von Endgerätevorrichtungen als Eingabeproben und Verwendung einer voreingestellte Höhe als Marker ermittelt wird.

2. Verfahren nach Anspruch 1, wobei

   die MR-Informationen Strahlinformationen von Klangreferenzsignalen, SRS-Strahlinformationen, umfassen, die Merkmalsinformationen ein aus den SRS-Strahlinformationen extrahiertes SRS-Strahlmerkmal umfassen, das SRS-Strahlmerkmal ein SRS-Strahlenergiemerkmal umfasst, und das SRS-Strahlenergiemerkmal durch Durchführen einer Dimensionalitätsreduktion an den SRS-Strahlinformationen ermittelt wird; und/oder
   die MR-Informationen Strahlinformationen von Synchronisationssignalblöcken, SSB-Strahlinformationen, umfassen, die Merkmalsinformationen ein aus den SSB-Strahlinformationen extrahiertes SSB-Strahlmerkmal umfassen, das SSB-Strahlmerkmal ein SSB-Strahlenergiemerkmal umfasst, und das SSB-Strahlenergiemerkmal durch die Endgerätevorrichtung durch Durchführen einer Dimensionalitätsreduktion an einem Vektor, umfassend eine Vielzahl von erfassten Leistungsaufnahmen des Referenzsignals, RSRPs, jeder bedienenden Zelle, ermittelt wird.

3. Verfahren nach Anspruch 2, wobei

   das SRS-Strahlmerkmal ferner mindestens eine von Merkmalsinformationen vertikaler Abmessungen und ein gesamtes SRS-Strahlenergiemerkmal umfasst, die Merkmalsinformationen vertikaler Abmessungen ein Prozentsatz in den SRS-Strahlinformationen von einer Summe von Energie sind, die von jeder Reihe eines Antennenfeldes der Basisstation stammt und die durch die Endgerätevorrichtung als Gesamtenergie in den SRS-Strahlinformationen erfasst wird, und das gesamte SRS-Strahlenergiemerkmal eine Summe einer voreingestellten Anzahl von höchsten Energiewerten in den SRS-Strahlinformationen ist; und

das SSB-Strahlmerkmal ferner ein SSB-Strahlablenkungsmerkmal und einen stärksten Pegel der SSB-Strahlen umfasst, das SSB-Strahlablenkungsmerkmal eine Anzahl von SSBs ist, die durch jede bedienende Zelle gesendet werden und die durch die Endgerätevorrichtung über Ablenkung ermittelt werden, und der stärkste Pegel der SSB-Strahlen mindestens einer der stärksten Pegel von SSBs ist, die durch eine primäre bedienende Zelle gesendet werden und die durch die Endgerätevorrichtung über Ablenkung ermittelt werden.

4.  Verfahren nach einem der Ansprüche 1 bis 3, wobei die Merkmalsinformationen der Endgerätevorrichtung ferner einen vertikalen Einfallswinkel vAOA zwischen der Endgerätevorrichtung und der Basisstation umfassen, und das Verfahren ferner Folgendes umfasst:

Bestimmen des vertikalen Hauptkeulenazimuts $\underline{\theta}_{Strahl\_v}{}^T$ der Endgerätevorrichtung durch den Server basierend auf den SRS-Strahlinformationen und dem Antennenazimut;
Normalisieren von Leistungsaufnahmen des Referenzsignals RSRPs oder Energiewerten entsprechend den RSRPs in allen Richtungen in den SRS-Strahlinformationen durch den Server, um $\underline{P}_{Strahllstg}$ zu ermitteln; und
Berechnen von $\underline{\theta}_{Strahl\_v}{}^T \times \underline{P}_{Strahllstg}$ durch den Server, um (205) den vAOA zu ermitteln.

5.  Verfahren nach Anspruch 4, wobei das Verfahren ferner Folgendes umfasst:

Bestimmen von M SSB-Strahlinformationen durch den Server entsprechend dem vAOA, wobei M eine positive ganze Zahl ist;
Bestimmen von N SSB-Strahlinformationen von stärksten SSB-Strahlsignalen in den M SSB-Strahlinformationen durch den Server, wobei N eine positive ganze Zahl kleiner als M ist;
Berechnen eines Mittelwerts der N SSB-Strahlinformationen als Referenzvektor durch den Server;
Berechnen einer Ähnlichkeit zwischen den SSB-Strahlinformationen und dem Referenzvektor durch den Server; und
Korrigieren des vAOA der Endgerätevorrichtung durch den Server, wenn die Ähnlichkeit kleiner als ein voreingestellter Wert ist.

6.  Verfahren nach Anspruch 5, wobei das Korrigieren des vAOA der Endgerätevorrichtung durch den Server Folgendes umfasst:
Subtrahieren eines voreingestellten Winkels von dem vAOA durch den Server, um einen neuen vAOA der Endgerätevorrichtung zu ermitteln.

7.  Verfahren nach einem der Ansprüche 1 bis 6, wobei die Merkmalsinformationen der Endgerätevorrichtung ferner eine Entfernung von der Endgerätevorrichtung zu der Basisstation umfassen, und das Verfahren ferner Folgendes umfasst:

Ermitteln erster Standortinformationen der Basisstation durch den Server;
Ermitteln zweiter Standortinformationen eines Gebäudes, in welchem sich die Endgerätevorrichtung befindet, durch den Server; und
Schätzen (206) der Entfernung von der Endgerätevorrichtung zu der Basisstation durch den Server basierend auf den ersten Standortinformationen und den zweiten Standortinformationen.

8.  Verfahren nach einem der Ansprüche 1 bis 6, wobei die Merkmalsinformationen der Endgerätevorrichtung ferner eine Entfernung von der Endgerätevorrichtung zu der Basisstation umfassen, und das Verfahren ferner Folgendes umfasst:

Ermitteln von Verzögerungsinformationen von der Endgerätevorrichtung zu der Basisstation durch den Server aus den MR-Informationen; und
Schätzen (206) der Entfernung von der Endgerätevorrichtung zu der Basisstation durch den Server basierend auf den Verzögerungsinformationen.

9.  Verfahren nach einem der Ansprüche 1 bis 8, wobei das Verfahren ferner Folgendes umfasst:

Ermitteln einer Höhe einer Ankerendgerätevorrichtung durch den Server;

Ermitteln von SSB-Strahlinformationen und/oder SRS-Strahlinformationen der Ankerendgerätevorrichtung durch den Server;

Bestimmen einer ersten Ähnlichkeit zwischen den SSB-Strahlinformationen der Endgerätevorrichtung und den SSB-Strahlinformationen der Ankerendgerätevorrichtung durch den Server; und/oder Bestimmen einer zweiten Ähnlichkeit zwischen den SRS-Strahlinformationen der Endgerätevorrichtung und den SRS-Strahlinformationen der Ankerendgerätevorrichtung durch den Server;

Schätzen einer zweiten Höhe der Endgerätevorrichtung durch den Server basierend auf der ersten Ähnlichkeit und/oder der zweiten Ähnlichkeit; und

Schätzen einer Höhe der Endgerätevorrichtung durch den Server basierend auf der ersten Höhe und der zweiten Höhe.

10. Computerlesbares Speichermedium, wobei das computerlesbare Speichermedium ein Programm speichert, und das Programm eine Computervorrichtung eines Servers in die Lage versetzt, das Verfahren nach einem der Ansprüche 1 bis 9 durchzuführen.

11. Computerprogrammprodukt, wobei das Computerprogrammprodukt computerausführbare Anweisungen umfasst, die computerausführbaren Anweisungen in einem computerlesbaren Speichermedium gespeichert sind, mindestens ein Prozessor eines Servers die computerausführbaren Anweisungen aus dem computerlesbaren Speichermedium liest und der mindestens eine Prozessor die computerausführbaren Anweisungen durchführt, um den Server in die Lage zu versetzen, das Verfahren nach einem der Ansprüche 1 bis 9 durchzuführen.

12. Kommunikationseinrichtung (400) zur Verwendung in einem Server, wobei die Kommunikationseinrichtung Mittel zum Implementieren des Verfahrens nach einem der Ansprüche 1 bis 9 umfasst.

13. Chipsystem für einen Server, wobei das Chipsystem einen Prozessor (403) und einen Speicher (404) umfasst, der Speicher und der Prozessor über eine Leitung miteinander verbunden sind, der Speicher Anweisungen speichert, und der Prozessor dazu konfiguriert ist, das Verfahren nach einem der Ansprüche 1 bis 9 durchzuführen.

**Revendications**

1. Procédé de positionnement vertical, comprenant :

la réception (201, 202), par un serveur (110), d'informations de rapport de mesure, MR, provenant d'un dispositif terminal (130) via une station de base (120) ;

l'obtention (203), par le serveur, de paramètres d'ingénierie de la station de base sur la base des informations MR, dans lequel les paramètres d'ingénierie comprennent une hauteur de site cellulaire, une inclinaison vers le bas de la station de base et un azimut d'antenne de la station de base ;

l'extraction (204), par le serveur, d'informations caractéristiques du dispositif terminal à partir des informations MR ; et

la saisie (207), par le serveur, des informations caractéristiques du dispositif terminal et des paramètres d'ingénierie de la station de base dans un modèle d'intelligence artificielle, AI, prédéfini pour prédire une première hauteur du dispositif terminal, dans lequel le modèle AI est obtenu par apprentissage en utilisant des paramètres d'ingénierie d'une pluralité de stations de base et des informations caractéristiques d'une pluralité de dispositifs terminaux comme échantillons d'entrée et en utilisant une hauteur prédéfinie comme étiquette.

2. Procédé selon la revendication 1, dans lequel

les informations MR comprennent des informations sur le faisceau de signal de référence de sondage, SRS, les informations caractéristiques comprennent une caractéristique de faisceau SRS extraite des informations sur le faisceau SRS, la caractéristique de faisceau SRS comprend une caractéristique d'énergie de faisceau SRS, et la caractéristique d'énergie de faisceau SRS est obtenue en réalisant une réduction de dimensionnalité sur les informations sur le faisceau SRS ; et/ou

les informations MR comprennent des information sur le faisceau de bloc de signal de synchronisation, SSB, les informations caractéristiques comprennent une caractéristique de faisceau SSB extraite des informations sur le faisceau SSB, la caractéristique de faisceau SSB comprend une caractéristique d'énergie de faisceau SSB, et la caractéristique d'énergie de faisceau SSB est obtenue par le dispositif terminal en réalisant une réduction de dimensionnalité sur un vecteur comprenant une pluralité de puissances reçues de signal de référence, RSRP, détectées de chaque cellule de desserte.

**3.** Procédé selon la revendication 2, dans lequel

la caractéristique de faisceau SRS comprend également au moins une information caractéristique de dimension verticale et une caractéristique d'énergie totale de faisceau SRS, les informations caractéristiques de dimension verticale sont un pourcentage, dans les informations sur le faisceau SRS, de la somme de l'énergie de chaque rangée d'un panneau d'antenne de la station de base et détectée par le dispositif terminal dans l'énergie totale dans les informations sur le faisceau SRS, et la caractéristique d'énergie totale de faisceau SRS est la somme d'une quantité prédéfinie de valeurs d'énergie les plus élevées dans les informations sur le faisceau SRS ; et la caractéristique de faisceau SSB comprend en outre une caractéristique de balayage de faisceau SSB et un niveau maximal de faisceau SSB, la caractéristique de balayage de faisceau SSB est une quantité de SSB qui sont envoyés par chaque cellule de desserte et qui sont obtenus par le dispositif terminal par balayage, et le niveau maximal de faisceau SSB est au moins l'un des niveaux maximaux de SSB qui sont envoyés par une cellule de desserte principale et qui sont obtenus par le dispositif terminal par balayage.

**4.** Procédé selon l'une quelconque des revendications 1 à 3, dans lequel les informations caractéristiques du dispositif terminal comprennent également un angle d'arrivée vertical vAOA entre le dispositif terminal et la station de base, et le procédé comprend en outre :

la détermination, par le serveur, d'un azimut vertical du lobe principal $\underline{\theta}_{beam\_v}{}^T$ du dispositif terminal en fonction des informations sur le faisceau SRS et de l'azimut d'antenne ;
la normalisation, par le serveur, de puissances reçues de signal de référence RSRP ou de valeurs d'énergie correspondant aux RSRP dans toutes les directions dans les informations sur le faisceau SRS, pour obtenir $\underline{P}_{BeamPwr}$ ; et
le calcul, par le serveur, de $\underline{\theta}_{beam\_v}{}^T \times \underline{P}_{BeamPwr}$, pour obtenir (205) le vAOA.

**5.** Procédé selon la revendication 4, dans lequel le procédé comprend en outre :

la détermination, par le serveur, de M éléments d'informations sur le faisceau SSB correspondant au vAOA, où M est un entier positif ;
la détermination, par le serveur, de N éléments d'informations sur le faisceau SSB des signaux de faisceau SSB les plus forts dans les M éléments d'informations sur le faisceau SSB, où N est un entier positif inférieur à M ;
le calcul, par le serveur, d'une valeur moyenne des N éléments d'informations sur le faisceau SSB comme vecteur de référence ;
le calcul, par le serveur, d'une similarité entre les informations sur le faisceau SSB et le vecteur de référence ; et
la correction, par le serveur, du vAOA du dispositif terminal si la similarité est inférieure à une valeur prédéfinie.

**6.** Procédé selon la revendication 5, dans lequel la correction, par le serveur, du vAOA du dispositif terminal comprend : la soustraction, par le serveur, d'un angle prédéfini du vAOA, pour obtenir un nouveau vAOA du dispositif terminal.

**7.** Procédé selon l'une quelconque des revendications 1 à 6, dans lequel les informations caractéristiques du dispositif terminal en outre également la distance entre le dispositif terminal et la station de base, et le procédé comprend en outre :

l'obtention, par le serveur, de premières informations de localisation de la station de base ;
l'obtention, par le serveur, de secondes informations de localisation d'un bâtiment dans lequel se trouve le dispositif terminal ; et
l'estimation (206), par le serveur, de la distance entre le dispositif terminal et la station de base sur la base des premières informations de localisation et des secondes informations de localisation.

**8.** Procédé selon l'une quelconque des revendications 1 à 6, dans lequel les informations caractéristiques du dispositif terminal comprennent en outre la distance entre le dispositif terminal et la station de base, et le procédé comprend en outre :

l'obtention, par le serveur, à partir des informations MR, d'informations de délai entre le dispositif terminal et la station de base ; et

l'estimation (206), par le serveur, de la distance entre le dispositif terminal et la station de base en fonction des informations de délai.

9. Procédé selon l'une quelconque des revendications 1 à 8, dans lequel le procédé comprend en outre :

l'obtention, par le serveur, de la hauteur d'un dispositif terminal d'ancrage ;
l'obtention, par le serveur, d'informations sur le faisceau SSB et/ou sur le faisceau SRS du dispositif terminal d'ancrage ;
la détermination, par le serveur, d'une première similarité entre les informations sur le faisceau SSB du dispositif terminal et les informations sur le faisceau SSB du dispositif terminal d'ancrage ; et/ou la détermination, par le serveur, d'une seconde similarité entre les informations sur le faisceau SRS du dispositif terminal et les informations sur le faisceau SRS du dispositif terminal d'ancrage ;
l'estimation, par le serveur, d'une seconde hauteur du dispositif terminal sur la base de la première similarité et/ou de la seconde similarité ; et
l'estimation, par le serveur, de la hauteur du dispositif terminal sur la base de la première et de la seconde hauteur.

10. Support de stockage lisible par ordinateur, dans lequel le support de stockage lisible par ordinateur stocke un programme, et le programme permet à un dispositif informatique d'un serveur de réaliser le procédé selon l'une quelconque des revendications 1 à 9.

11. Produit de programme informatique, dans lequel le produit de programme informatique comprend des instructions exécutables par ordinateur, les instructions exécutables par ordinateur sont stockées dans un support de stockage lisible par ordinateur, au moins un processeur d'un serveur lit les instructions exécutables par ordinateur à partir du support de stockage lisible par ordinateur, et l'au moins un processeur réalise les instructions exécutables par ordinateur pour permettre au serveur de réaliser le procédé selon l'une quelconque des revendications 1 à 9.

12. Appareil de communication (400) destiné à être utilisé dans un serveur, dans lequel l'appareil de communication comprend des moyens pour mettre en œuvre le procédé selon l'une quelconque des revendications 1 à 9.

13. Système de puce pour un serveur, dans lequel le système de puce comprend un processeur (403) et une mémoire (404), la mémoire et le processeur sont interconnectés par une ligne, la mémoire stocke des instructions et le processeur est configuré pour réaliser le procédé selon l'une quelconque des revendications 1 à 9.

Communication system 100

130

140

110

120

FIG. 1

| Terminal device | Base station | Server |
|---|---|---|

201: MR information →

202: MR information →

203: Obtain engineering parameters of the base station based on the MR information

204: Extract feature information of the terminal device from the MR information

205: Estimate a vAOA between the terminal device and the base station based on an antenna azimuth of the base station and SRS beam information

206: Estimate a distance from the terminal device to the base station

207: Input the feature information of the terminal device and the engineering parameters of the base station into a preset AI model, to predict a first height of the terminal device

208: Perform building height mapping based on map information of a building and a height of the terminal device, to obtain a location of the terminal device in the building

FIG. 2-1

MC information

MR information

— 120

— 130

FIG. 2-2

FIG. 2-3

Terminal device B

Beam side lobe

Building

Base
station

Terminal
device A

Beam main
lobe

FIG. 2-4

Training

| Training set | | AI model |

| Feature information and engineering parameters | |

First height of a
terminal device

FIG. 2-5

Mechanical
downtilt

SSB beam feature/
SRS beam feature

Base station

vAoa

Cell site
height

Antenna
azimuth

Height to be
measured

Distance between a
terminal device and
a base station

FIG. 2-6

Highest terminal
device

Lowest terminal
device

FIG. 2-7

FIG. 2-8

FIG. 3

400

Communication apparatus

403

Processor

401

Receiver

402

Transmitter

404

Memory

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210885300

**Non-patent literature cited in the description**

- **VIVO**. Other aspects on AI/ML for positioning accuracy enhancement. *3GPP DRAFT; R1-2203555, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX*, 29 April 2022, vol. RAN WG1 (e¬Meeting)